# EUROPEAN PATENT APPLICATION

(11) **EP 4 512 846 A1**
(43) Date of publication of application: **26.02.2025**
(21) Application number: 24194958.5
(22) Date of filing: 16.08.2024
(51) Int. Cl.: C08G 69/14, C08K 3/22, C08K 7/20, C08L 77/02, B33Y 10/00, B33Y 70/00, B33Y 80/00

(54) **FLAME RESISTANT MATERIALS FOR POWDER BED FUSION TECHNOLOGIES AND USING SUCH MATERIALS IN A LAYER-BY-LAYER PROCESS**

(30) Priority: 21.08.2023 EP 23192496
(71) Applicant: EMS-CHEMIE AG, 7013 Domat/Ems (CH)
(72) Inventor: WERNER, Daniel, 9032 Engelburg (CH); JENDE, Lars, 7013 Domat/Ems (CH); ZIMNIAK, Piotr, 7013 Domat/EMS (CN)
(74) Representative: Bremi, Tobias Hans

(57) **Abstract**

Powder for the production of mouldings in a layer-by-layer process in which areas of a powdered layer are selectively melted, sintered, fused, or solidified,
wherein the powder consists of the following components:
a) 60 - 99 % by weight of a thermoplastic polyamide with a melting temperature smaller than 175°C;
b) 1 - 40 % by weight of a mineral inorganic flame retardant;
c) 0 - 25 % by weight of additives;
wherein the components a)-c) add up to 100 % by weight of the total material of the powder.

## Description

### TECHNICAL FIELD

The present invention relates to powder materials for use in powder bed fusion (PBF) technologies such as selective laser sintering (SLS), as well as to methods for the manufacture of such materials, selective PBF processes such as laser sintering processes using such materials and articles prepared using these materials in an SLS process.

### PRIOR ART

Powder bed fusion (PBF) technologies is an additive manufacturing process to produce spatial structures by sintering with a laser from a powdered starting material. In this process, unconsolidated loose powder is presented in a container, and the work piece is successively built up layer by layer by selective irradiation from above with a laser, which irradiates only the areas to be solidified and causes this solidification by melting the material. After irradiation of a layer and its liquefaction and/or solidification, a subsequent layer of powdered starting material is laid out over it and in the next step the desired area in this next layer is melted and, if necessary, solidified and at the same time fused to the underlying molten or already solidified layer.

Specifically, to prepare the moulded part, the polymer powder is applied in a thin layer to a lowerable plate of a sintering chamber, which is normally heated to a temperature slightly below the melting point of the polymer. The layer thickness is chosen in such a way that a melting layer is formed during or after the subsequent laser sintering. The laser sinters the powder particles according to the specifications of the controlling computer. After that, the plate is lowered by the amount of the layer thickness, usually 0.05 to 2.0 mm. With the application of a new powder layer, the process is repeated. After the completion of a preselected number of cycles according to the intended number of layers, a block has been formed, which externally consists of powder. Inside, it houses a highly viscous melt or an already largely solidified block in the shape of the desired moulded part. Non-melted areas where the powder is still in solid form stabilize the shape of the melt. After that, the block, consisting of powder shell and melt, is slowly cooled, and the melt solidifies when it falls below the solidification temperature of the polymer. It is advantageous if the block is kept at the solidification temperature until the phase transformation is completed. This is achieved by selecting a low cooling rate in the temperature range of the phase transformation, so that the released heat of solidification keeps the moulded body inside at exactly at the solidification temperature until the phase transformation is completed. After cooling, the block is removed from the sintering chamber and the moulding body is separated from the unsolidified polymer powder. The powder can be used again for the process.

As described in DE 197 47 309 commonly used polymer powders for such processes include polyamide 11 (PA 11) or polyamide 12 (PA 12), polyamide 6 (PA 6), but also polyacetals, polypropylene (PP), polyethylene (PE) and ionomers. Polycarbonates (PC) and polystyrene (PS) have also been used.

EP-A-1 720 930 describes a copolymer powder, and the use of this powder for non-focused moulding processes as well as mouldings made from such a polymer powder. The forming processes are layer-by-layer processes that use powders, whereby selectively areas of the respective layer are melted by non-focused introduction of electromagnetic energy. Selectivity can be achieved by masks, by applying inhibitors, absorbers, susceptors. Systems of the construction PA 6/12/66 are effectively worked and an MVR value in the range of 1-12 g/min is prescribed.

EP-A-2 274 363 relates to a method for reducing the crystallization temperature and the melting temperature of a polyamide powder resulting from the polymerization of at least one major monomer, wherein the at least one minority comonomer is selected from aminocarboxylic acids, diamine-diacid pairs, lactams and/or lactones, and wherein the at least one smaller co-monomer 0.1 to 20 % by mass of the total mixture of the monomer (s) and co-monomer (s), preferably 0.5, represents to 15 mass% of the total mixture. Systems of the type PA 12/6 are used, whereby the proportion of caprolactam must not exceed 20 %.

WO-A-2011124278 relates to a polymer powder for use in a layer-by-layer process in which areas of each powder layer are selectively fused by introducing electromagnetic energy. The polymer powder contains: at least one polyamide of the AB type, prepared by polymerization of lactams having 10 to 12 carbon atoms in the monomer unit or polycondensation of the corresponding aminocarboxylic acids having 10 to 12 carbon atoms in the monomer unit and at least one AABB type polyamide prepared by polycondensation of diamines and dicarboxylic acids, each of which comprises 10 to 14 carbon atoms in the monomer units. The disclosure also relates to a process for preparing such a powder, a layer-by-layer process for producing a moulding body from such a powder in which areas of each layer are selectively melted by introducing electromagnetic energy, wherein selectivity is obtained using masks or by applying inhibitors, absorbers or susceptors or focusing the applied energy, and thus prepared mouldings.

WO-A-2015009790 describes a part material for printing three-dimensional parts using an additive manufacturing system based on electrophotography, where the part material contains a composition with a semi-crystalline thermoplastic material and a charge control agent. The part material is provided in powder form with a controlled particle size and is configured for use in the electrophotography-based additive manufacturing system with a layer transfusion arrangement for printing the three-dimensional parts layer by layer. Although different materials for the powder used are mentioned, concrete systems are not worked.

WO-A-2020064825 relates to a sintered powder comprising a first polyamide component and a second polyamide component, wherein the melting point of the second polyamide component is higher than the melting point of the first polyamide component. The disclosure further relates to a method for preparing a moulding by sintering the sintered powder or by an FFF process (fused filament fabrication) and a moulding obtainable by the method. The disclosure further relates to a process for preparing the sintered powder. Mixtures of aliphatic polyamides with semi-aromatic polyamides are used, whereby polyamide 6 and polyamide 66 are used as aliphatic polyamides.

CN-A-107337793 introduces a copolymerized nylon powder material used for selective laser sintering and a process for its manufacture. The method includes the following steps: performing a copolymerization reaction on a short-chain nylon raw material and a long-chain nylon raw material using a copolymerization reaction principle to obtain copolymerized nylon resin, performing a cryogenic crushing, drying and sieving of the copolymerized nylon resin, and adding a flow aid and an antioxidant to obtain the copolymerized nylon powder material selective laser sintering is used. Systems based on polyamide 1010 as well as polyamide 1212 and polyamide 66 or PA6 in the form of PA6/1010, PA66/1010, PA 6/1212, PA 66/12, are used.

CN-A-104830053 relates to the field of high-molecular materials and aims to solve a problem of a high industrial cost of nylon 12 in the field of 3D printing. It discloses a caprolactam-laurolactam co-polymer modified by glass fibers and a preparation method of a powder thereof, wherein the relative mechanical performances of the obtained polymer are described. The co-polymer powder is good in the performances such as thermodynamic properties and size stability, is low in production cost and usage cost, is uniform in particle size and can be used for partially replacing, especially in the field of 3D printing, the nylon 12 at a certain degree. Specific systems disclosed are only PA 6/12 systems, so systems based on caprolactam and laurolactam with glass fibres.

WO-A-2005082979 discloses a polymer powder comprising a copolymer, to the use of such a powder in a shaping method and to moulded bodies that are produced from such a polymer powder. The shaping methods are methods that operate layer by layer using a powder and during said methods areas of each layer are fused by the focussed application of electromagnetic energy. Once cooled, the solidified moulded bodies can be removed from the powder bed. The component characteristics of the moulded bodies that have been produced using the inventive powder according to the method, can be varied within a range, depending on their composition in comparison to moulded bodies produced from conventional powders. Specific systems disclosed are systems including PA 6/12/612, PA 6/12/66, PA 12/IPDA12, as well as polyester systems based on terephthalic acid, wherein IPDA is isophorone diamine.

US-B-8097333 discloses pre-impregnated composite material (prepreg) that can be cured to form composite parts that have high levels of damage tolerance. The matrix resin includes a thermoplastic particle component that is a blend of particles that have a melting point above the curing temperature and particles that have a melting point at or below the curing temperature. Specific systems disclosed are PA 6/12 systems, so systems based on caprolactam and laurolactam.

WO-A-2005105891 relates to a polymer powder, comprising polyamide, use thereof in a moulding method and moulded body made from said polymer powder. The moulding method involves layering methods using powder, whereby selective regions of the relevant layer are fused by introduction of electromagnetic radiation. The selectivity can be achieved by means of masking, application of inhibitors, absorbers or sensitizers, or by focussing of the input energy. After cooling, the solidified regions can then be removed as a moulded body from the powder bed. Specific systems disclosed include PA 12, PA1010, PA1012, PA1212, PA612, PA 613.

WO-A-2016112283 also discloses powder compositions for laser sintering. Nylon copolymer compositions are described which allegedly provide enhanced performance in processing and finished products when used in 3D laser sintering processes. Specific systems disclosed include PA11, PA 12, PA 610/6T6I, PA 612/6T6I, PA6/69, PA6/6T6I. WO-A-2007051691 discloses a process for producing ultrafine powders based on polyamides, in which polyamides having a relative solution viscosity in the range from 1.5 to 2.0, are brought into contact with an alcoholic medium in the presence of inorganic particles under super atmospheric pressure and/or elevated temperature to produce an at least partial solution and the polyamide is subsequently precipitated from the at least partial solution, characterized in that a suspension of the inorganic particles suspended in the alcoholic medium is used. The resulting ultrafine polyamide powders have a specific surface area determined by the BET method in the range 5-100 m²g, a fineness d50 of less than 70 µm; a bulk density BD in the range from 250 to 1000 g/l; and a particle content of from 0.1 to 80% by weight of inorganic particles based on the total weight of the polyamide powder. Specific systems disclosed include PA 12, PA1010, PA1012.

EP-A-2650106 discloses a polymer powder exhibiting a single melting point determined by differential scanning calorimetry, comprising polyamide of AABB type. Specific worked systems disclosed include PA1012, PA1010, PA1013, PA 613, PA1212. WO-A-2009101320 relates to a powder of PA polyamide (homopolyamide or copolyamide) at least partially derived from renewable materials, in which the particles have a non-spherical shape and a median volume diameter lower than or equal to 20 µm. It also relates to a method for preparing such a powder. Specific worked systems disclosed include PA11 and PA12.

EP 23 171 763.8 (not published at the time of priority) discloses a method for the preparation of moldings in a layer-by-layer process in which selectively areas of a powdered layer are melted, sintered, fused, or otherwise solidified, characterized in that as a powder for the powdered layer a thermoplastic, ground polyamide powder is used, in which the polyamide comprises laurolactam and caprolactam, preferably exclusively, and wherein the proportion of caprolactam is in the range of 40 - 60 mol% of the lactams used.

US20220185991 discloses a process for the preparation of flame-retarded parts by powder bed fusion, in which the powder comprises at least one polyamide and at least one flame-retardant agent of cyclic phosphonate ester type.

WO2005010087 relates to a powder containing a polymer and a flameproofing agent based on ammonium polyphosphate, to the use of said powder for the layered production of moulded bodies, and to moulded bodies produced from said powder. The moulded bodies produced by the inventive powder have significant advantages in terms of the flammability thereof in relation to conventional products, enabling, for example, the use thereof in aeroplanes. Furthermore, moulded bodies produced from the inventive powder have improved mechanical properties compared to moulded bodies based on conventional powders, especially in terms of the elasticity module and the tensile strength thereof. The density of such moulded bodies approaches that of injection-moulded bodies.

US-A-2022213274 discloses a powder of a copolymer with polyamide blocks and polyether blocks. The invention concerns a composition comprising a powder of a copolymer with polyamide blocks and polyether blocks, the copolymer being in particle form with a pulverulent filler content of 0 to 10% by mass and the copolymer having a ratio by mass of the polyamide blocks to the polyether blocks of less than or equal to 0.7, the polyamide blocks having a number-average molar mass of less than or equal to 1000 g/mol; and the composition comprising a flow aid at a content of greater than or equal to 0.3% by mass. The invention also concerns the process for producing this composition, the use of the composition for constructing three-dimensional articles, and the three-dimensional articles manufactured from said composition.

Ahmad et al. (Polymers 2022, 14(14), 2843; https://doi.org/10.3390/polym14142843) report, that polymers are being used in many applications all around the world. However, there are some drawbacks in the properties of polymers that could hamper their usage in certain applications. Therefore, a new material polymer composite was introduced. A polymer composite is a polymer-based material with the addition of a filler. Many researchers have reported the improvement in the properties of a polymer when a filler was introduced. This helps minimize the disadvantages of using a polymer. As a result, polymer composite products can be used in many industries, such as automobile, aerospace, biomedical, and packaging. Fillers derived from natural minerals, such as dolomite, are among the best reinforcement materials for polymeric materials because they are plentiful and low cost, have high rigidity and hardness, and even have tailorable surface chemistry. The use of dolomite as a filler in a polymer composite system has gained increasing attention in recent years after researchers successfully proved that it is capable of improving the mechanical, physical, and thermal properties of various polymeric materials. However, chemical or physical treatment/modification of raw dolomite is needed in order to prepare it as an efficient reinforcing filler. This procedure helps to improve the performance of the resultant polymer composites. This article reviews the usage of dolomite as a filler in a variety of polymeric materials and how it improved the performance of the polymer composite materials. It also highlights several methods that have been used for the purpose dolomite's treatment/modification. Furthermore, the role of dolomite as a co-filler or a hybrid filler in a polymer composite system is also discussed, revealing the great potential and prospect of this mineral filler in the field of polymer composites for advanced applications. WO-A-2022106402 relates to a pulverulent composition comprising (a) at least one phosphate flame retardant synergist selected from hydrogen phosphate salt, dihydrogen phosphate salt, hydrate thereof and mixture thereof; (b) at least one flame retardant; and (c) at least one thermoplastic polymer. The disclosure also relates to a 3D-printed object formed from the pulverulent composition and a process of forming 3D-printed object. The pulverulent composition shows good printability and the 3D-printed objects obtained from the thermoplastic powders not only have excellent flame-retardant performance but also have good mechanical properties. In the examples, PA6, PA11 and PA12 systems are presented, which all have melting points of at least 180°C or higher.

US-A-2007197692 relates to a polymer powder which comprises copolymer, and to the use of this powder for shaping processes, and also to moldings produced from this polymer powder. The shaping processes are layer-by-layer processes which use powders, regions of the respective layer being selectively melted via unfocused introduction of electromagnetic energy. The selectivity of the energy introduction process can-but without any intention of restricting the invention thereto-be achieved via masks, via application of inhibitors, or of absorbers or of susceptors. The powder is preferably used in processes in which selectivity is achieved via application of inhibitors or of susceptors, or via a masking method. After cooling, the moldings, now solidified, can be removed from the powder bed. By way of contrast with moldings made from conventional powders, the properties of the components consisting of moldings constructed by the inventive processes, using the inventive powder, and particularly the mechanical and thermal properties of the components, can be varied widely, depending on the composition. In particular in the case of amorphous copolymers, well-judged selection of comonomers can optimize flow behavior for the shaping process. Another advantage is that processing can also be simplified by using the correct composition of the copolymer. In particular, processing at relatively low temperatures is possible, simplifying temperature control and accelerating the process. The slower crystallization of semicrystalline copolymers, when compared with semicrystalline homopolymers, promotes the coalescence of the molten particles and leads to better shrinkage behavior in the moldings.

CN-A-112409784 relates to an anti-dripping nylon material for selective laser sintering and a preparation method thereof, and the preparation method comprises the following steps: adding low molecular weight nylon powder, a condensed phase flame retardant metal compound and a coupling agent into a first container, stirring, adding into an extruder, adding a first lubricant, and carrying out melt mixing to obtain a mixed nylon material; adding the mixed nylon material, high-molecular-weight nylon resin and a second lubricant into an extruder for mixing, and performing wire drawing and dicing to obtain anti-dripping nylon granules; transferring an inorganic filler and the anti-dripping nylon granules into a copious cooling pulverizer for processing and pulverizing to obtain anti-dripping nylon semi-finished product powder, and adding the anti-dripping nylon semi-finished product powder, a flow aid and an antioxidant into a second container for stirring to obtain the anti-dripping nylon material for selective laser sintering. The condensed-phase flame-retardant metal compound has a good dispersion degree in the low-molecular-weight nylon powder, and the finished material has a good anti-dripping effect and mechanical properties.

### SUMMARY OF THE INVENTION

It is an object of the present invention to propose a powder for use in a powder bed fusion method, such as, for example, an SLS method of the type described above. The powder bed fusion method can comprise the use of a focused or non-focused input of electromagnetic energy, thermal energy, or other energy to selectively fuse, melt, sinter, or solidify a powder material in an additive manufacturing process. Preferably, the powder is for the production of flame protected articles/mouldings in a layer-by-layer process in which areas of a powdered layer are selectively melted using focused or non-focused input of electromagnetic energy. Possible are uses in SLS processes but also multi jet fusion (MJF), selected absorption fusion (SAF) or high speed sintering (HSS) processes, wherein the resulting part exhibits good-to-excellent flame retardancy by industry standards (UL-94 V). A powder in accordance with the present invention is defined as a (at room temperature) solid substance reduced to a state of fine, loose particles for example by crushing, grinding, disintegration, precipitation or a combination thereof.

According to a first aspect of the present invention it relates to a powder as defined in claim 1 for the preparation of mouldings, in particular in a layered process in which selectively areas of a powdered layer are
(1) melted by input of electromagnetic energy (typically by a controlled laser),
(2) melted by input of thermal energy from a source other than electromagnetic energy, or
(3) otherwise melted, fused, sintered, or solidified to form an article or object.

More specifically, it relates to a powder for the production of mouldings in a layer-by-layer process in which areas of a powdered layer are selectively melted, sintered, fused, or solidified, wherein the powder consists of the following components:
a) 60 - 99 % by weight of a thermoplastic polymer (e.g. selected from the group consisting of polyamide, polyester, polyethylene, polypropylene, polyurethane, or a copolymer and/or mixture thereof, in particular polyamide) with a melting temperature (measured as defined further below) smaller than 175°C, preferably below 160°C;
b) 1 - 40 % by weight of an inorganic flame retardant (in particular halogen-free flame retardant, preferably the inorganic flame retardant is a mineral, i.e. in particular of a chemical composition and a crystal structure that occurs naturally in essentially pure form), normally one activating and/or decomposing starting at a temperature of at most 260°C;
c) 0 - 25 % by weight of additives, different from a) and b);
wherein the components a)-c) add up to 100 % by weight of the material of the powder.

As one can see from the lower limit value for the proportion of component a), the powder material is subject to the condition that the sum of components B) and C) do not make up more than 40% of the total of the weight of the powder material.

The present invention also relates to and claims the use of such a powder.

The proposed SLS powder solves the following problems associated with the current technology:
- it provides for improved recyclability whilst retaining standardized flame-retardant rating of the resulting parts made using the powder, which cannot be achieved using existing materials;
- it provides good mechanical properties of the parts made using the powder, in particular values of elongation at break of at least or larger than 10%;
- it provides for good post processing properties (no or significantly reduced red streaking);
- it provides for good print ability (in particular low warpage);
- it avoids the use of halogen-based flame-retardant materials.

Important elements of the invention are, taken alone or in combination, as follows:
- Utilisation of a lower melting polymer (e.g. Tₘ < 160°C) enables implementation of preferably mineral based flame retardants (e.g. Al(OH)₃), which activate/decompose at >160°C, enabling easier printing and part-quality;
- Utilisation of a lower melting polymer (e.g. Tₘ < 160°C) ensures a lower printing temperature, which reduces the decomposition of non-mineral based flame-retardant additives;
- Utilisation of a lower melting polymer (e.g. Tₘ < 160°C) ensures a lower printing temperature and thus an increased recyclability of used powder;
- Utilisation of preferably mineral based flame retardants in SLS printing does not interfere with laser absorbing flame retardants (e.g. polyphosphinates), allowing production of parts;
- Utilisation of e.g. a co-polyamide or lower crystalline (crystallinity: <35%) polymer enables a higher loading of flame retardant materials (e.g. >10%) to ensure high flame retardancy at minimal wall thickness (e.g. 1-2 mm), whilst retaining good printability and good mechanical properties. (1-40% or 1-30% flame retardant loading, preferably 10-25%);
- Utilisation of a combination of flame-retardant materials and fillers (e.g. glass fibers) enables increased mechanical properties and flame retardant performance. (additive: 0-25%, preferably 5-15%);
- Utilization of poorly soluble flame retardant materials (such as Al(OH)₃), enables effective post-processing by vapour smoothing.

According to a first preferred embodiment, the thermoplastic polymer has a crystallinity below 35%, preferably below 30%.

According to yet another preferred embodiment, the thermoplastic polymer is a semi-crystalline polyamide, preferably based on aromatic and/or aliphatic dicarboxylic acid and/or aromatic and/or aliphatic, including cycloaliphatic, diamine and/or aromatic and/or aliphatic lactam/amino carboxylic acid building blocks.

According to a preferred embodiment, the semi-crystalline polyamide is a polyamide free from polyether blocks.

According to a preferred embodiment, the powder for the production of mouldings is free from inorganic flame retardants which have a decomposition temperature above 350°C or above 400°C, or above 500°C or even above 600°C.

According to a preferred embodiment, the powder for the production of mouldings is free from dolomite (anhydrous carbonate mineral composed of calcium magnesium carbonate, such as in particular CaMg(CO₃)₂). neither as inorganic flame retardant (b) nor as additive (c).

According to a further preferred embodiment, the powder for the production of mouldings is free from phosphate-based flame retardants or synergists, neither as inorganic flame retardant (b) nor as additive (c), preferably the powder for the production of mouldings is free from ammonium polyphosphate (APP).

Said aromatic and/or aliphatic, including cycloaliphatic diamines are preferably selected from the group consisting of linear or branched aliphatic, cycloaliphatic or aromatic diamines with 4-20 carbon atoms.

Linear aliphatic diamines are preferably selected from linear aliphatic diamines with 6-12 carbon atoms, preferably from the group of tetramethylenediamine, hexamethylenediamine, octamethylenediamine, nonamethylenediamine, decamethylenediamine or mixtures thereof.

Cycloaliphatic diamines are preferably selected from the group consisting of bis(4-amino-3-methylcyclohexyl)methane (MACM, CAS No. 6864-37-5), bis(4-aminocyclohexyl)methane (PACM, CAS No. 1761-71-3) or mixtures thereof.

Aromatic diamines are preferably selected from xylylenediamine, in particular p-xylylenediamine, m-xylylenediamine or mixtures thereof.

Said aromatic and/or aliphatic dicarboxylic acids are preferably selected from the group of linear or branched aliphatic, cycloaliphatic or aromatic dicarboxylic acids with 4-20 carbon atoms, wherein preferably linear aliphatic dicarboxylic acids are selected from succinic acid, adipic acid, suberic acid, sebacic acid, dodecanoic acid or mixtures thereof, and wherein aromatic dicarboxylic acids are selected from the group consisting of terephthalic acid, isophthalic acid or mixtures thereof.

Preferably the polyamide is a copolyamide which comprises caprolactam building blocks, preferably with further building blocks based on linear aliphatic lactams/aminocarboxylic acids and/or linear aliphatic dicarboxylic acids and linear aliphatic diamines, at last one of which preferably having at least 9 carbon atoms.

Further preferably, the polyamide is selected from the group consisting of: PA6/6I, PA 6/66, PA 6/66/6I, PA 6/106/12, PA 6/610, PA 6/610/12, PA 6/612/12, PA 6/1010/12, PA 6/1012/12, PA6/12, PA6/106, PA6/1010, PA6/1012, PA6/69 or a mixture thereof, preferably consisting of PA6/12, PA6/106, PA6/1010, PA6/1012, PA6/69 or a mixture thereof, wherein preferably, for adapting the melting temperature, the caprolactam molar proportion is at most 70%, preferably at most 60% or in the range of 30-70%, wherein the caprolactam molar proportion is with respect to the total of the lactams used in case of PA6/12 and with respect to the total of the lactams and diamine-dicarboxylic acid blocks used in the other cases, e.g. in case of PA6/106, PA6/1010, PA6/1012, PA6/69.

The thermoplastic polyamide powder preferably does not comprise aromatic building blocks.

According to yet another preferred embodiment, the thermoplastic polymer is selected as polyamide PA 6/12 or a copolymer thereof, with a laurolactam molar proportion of at least 20%, preferably of at least 25%, preferably in the range of 30-70% or 40-50%, wherein the laurolactam molar proportion is with respect to the total of the lactams used.

According to yet another preferred embodiment, the thermoplastic polymer is selected as polyamide PA 6/12 or a copolymer thereof, with a caprolactam molar proportion of at least 20%, preferably of at least 25%, preferably in the range of 30-70%, wherein the molar proportion is with respect to the total of the lactams used.

According to another preferred embodiment, the thermoplastic polymer has at least one of the following properties:
- a melting point, measured in accordance with ISO 11357, of below 175 °C, below 170 °C or below 160 °C or below 150 °C or below 140 °C, preferably in the range of 100-155 °C or 120-140 °C,
- is a ground or participated polyamide powder, and wherein preferably in case of a ground powder it is prepared by a cryogrinding process,
- has a relative viscosity, preferably measured in m-cresol at a temperature of 20 °C and a concentration of 0.5 wt.-% according to ISO 307, in the range of 1.5-2.1, preferably in the range of 1.6-2.0,
- has a melt enthalpy, measured in accordance with ISO 11357, below 20 J/g, preferably below 10 J/g.

According to yet another preferred embodiment, the proportion of component a) of the thermoplastic polymer is in the range of 65-95% by weight, preferably in the range of 70-90% by weight or 70-80% by weight, in each case with respect to the total material of the powder.

According to another preferred embodiment, the inorganic flame retardant is activating and/or decomposing starting at a temperature of at most 260°C or at most 200°C, preferably at most 190°C, wherein preferably the inorganic flame retardant is activating and/or decomposing in a temperature range of 170-260°C or 170-350°C, preferably in the range of 180-260°C or 180-340°C.

The inorganic flame retardant is preferably a nitride, preferably selected from the group consisting of BN, ZnB or a mixture thereof, and/or a metal hydroxide, preferably selected from the group consisting of aluminium trihydroxide (Al(OH)₃, also termed ATH), basic magnesium carbonate (MgCO₃Mg(OH)₂, also termed BMC), magnesium dihydroxide (Mg(OH)₂), or a combination thereof, wherein preferably the inorganic flame retardant is selected as aluminium trihydroxide.

Typically, the proportion of component b) of the inorganic flame retardant is in the range of 5-30%, preferably in the range of 10-25%, most preferably in the range of 15-25%, in each case with respect to the total material of the powder.

The additives of component c) are different from component b), and can be selected from the group consisting of fillers, preferably selected from the group of talc, aluminium oxide-based fillers, glass fillers, preferably glass fibres and/or glass beads, calcium carbonate; flow agents, preferably selected from the group of fumed or precipitated silica, metal salts of long-chain fatty acids, including metal stearates, titanium dioxide, group 1 salts, aluminium oxide; flame retardant systems different from component b), flame retardant synergist compounds (e.g. metal oxides, borates, nitrides, organo-phosphorus, and cyanurates, in each case different from b)), preferably containing nitrogen and/or phosphorous, including melem, melam, melon or other melamine or derivatives thereof like melaminpolyphosphate.

In some embodiments, for example, a powder for additive manufacturing described herein comprises a flow aid component. So, in order to achieve increased flowability of said powder in the layer fusing process, slight amounts of flowagent, or a combination of flow agents may be used. Such flow agents are e.g.: Talc, Al based flow aids, Glass filler, CaCO₃ (or other metal carbonates), Aerosil (fumed or precipitated Silica), Sipernat variations, Mg Stearate (or other Stearates), TiO₂ (or other metal oxides), Group 1 salts, and metal based-long chain fatty acids.

Also possible is to have a coating on the thermoplastic polyamide powder particles with corresponding additives supporting the additive manufacturing process.

Preferably, the thermoplastic (polyamide) powder is a ground or participated (polyamide) powder, and preferably in case of a ground powder it is prepared by a cryogrinding process. The powder preferably has an average particle size D50, preferably measured according to ISO 13322-2, in the range of 50-80 µm, preferably in the range of 50-65 µm, more preferably in the range of 50-60 µm.

Preferably the particle size distribution is such that 80%, preferably 90%, of the particles are located within a range of sizes of 20-100 µm, preferably in the range of 40-90 µm. Preferably, the value of D10 measured according to ISO 13322-2 is in the range of 15-45 µm, preferably in the range of 20-30 µm, and/or the value of D95 measured according to ISO 13322-2 is in the range of 80-150 µm, preferably in the range of 85-98 µm.

Typically, the powder and/or the thermoplastic polyamide powder has a diameter D50 measured according to ISO 13322-2 of 50-80 µm, preferably 50-65 µm, more preferably 50-60 µm.

The powder particles preferably have essentially a slightly jaggered or irregularly shaped (e.g. sphericity far smaller than 1), spherical or potato shape.

The thermoplastic, ground polyamide powder preferably has an MFR value, preferably measured according to ISO 1133, in the range of 6-17 g / 10min. According to a further aspect of the present invention, it relates to a method for preparing a powder as defined above, wherein, after melt-mixing of the components a)-c), the thermoplastic material is subjected to a cryo-grinding process or a precipitation process and is subsequently subjected to a particle size filtering process, preferably for the generation of a particle size distribution such that the average particle size D50, preferably measured according to ISO 13322-2, is in the range of 50-80 µm, preferably in the range of 50-65 µm, more preferably in the range of 50-60 µm.

In one example, the method is characterized in particular in that by means of a suitable screening technology (tumble air jet screener, ultrasound tumbler or winnower) a grain size distribution suitable for the printing process is achieved. In other examples, the method may not use a screening technology.

Furthermore, in some examples, the method includes forming a thermoplastic polyamide powder using solvent precipitation, solvent pulverization, melt emulsification, melt pulverization, or another micronization technique, if needed after mixing with additives. In addition, in some embodiments, it is possible to prepare a composition for use in additive manufacturing by blending the polyamide powder with one or more additional components or additives, such as an additive or filler. Such a composition can be prepared, in some examples, by dry blending or wet blending.

According to a further aspect of the present invention, it relates to a method of printing a three-dimensional article comprising the steps:
providing a powder as defined above; and
selectively solidifying layers of the powder to form the article, preferably using focused or non-focused input of electromagnetic energy, wherein preferably the powder is provided in a layer-by-layer process,
wherein preferably the powder has a particle diameter D50 measured according to ISO 13322-2 of 50-80 µm, preferably 50-65 µm, more preferably 50-60 µm.

According to a further aspect of the present invention, it relates to a flame-retardant article prepared using a method as defined above.

According to a further aspect of the present invention, it relates to the use of a powder as defined above for the production of mouldings in a in a layer-by-layer process in which areas of the powdered layer are selectively melted, sintered, fused, or solidified, preferably by focused or non-focused input of electromagnetic energy.

Further embodiments of the invention are laid down in the dependent claims.

### DESCRIPTION OF PREFERRED EMBODIMENTS

Preferred embodiments of the invention are described below on the basis of the embodiments, which serve only as an explanation and are not to be interpreted restrictively. According to the invention, the condensation reaction as well as the grinding process and the use are explained.

All materials including Comparison materials (VB) were produced with first compounding granulates and then producing powders.

### Step 1 - Production of a PBF flame-retardant polymer composition for a 3D printing process

A polymer (Poly), which has a low melting point (e.g. Tₘ < 160°C), is compounded on the twin screw extruder ZSK-30/2 from Werner & Pfleiderer at 160-200 °C with a flame-retardant material (FR) in a specific ratio, with or without a filler (F). The compounding process is performed below the activation temperature of the flame-retardant material, but higher than the melting point of the polymer.

Table 1 summarizes the flame-retardant PBF polymer compositions according to the invention and Table 2 the comparative example PBF polymer compositions.

**Table 1: Flame-retardant PBF polymers according to the invention**

| | **B1** | **B2** | **B3** | **B5** | **B6** | **B7** |
|---|---|---|---|---|---|---|
| Polymer (Poly) | PA6/12 | PA6/12 | PA6/12 | PA6/106 | PA6/106 | PA6/106 |
| Flame-retardant (FR) | Al(OH)₃ | Al(OH)₃ | Al(OH)₃ | Al(OH)₃ | Al(OH)₃ | Al(OH)₃ |
| Filler (F) | - | GB | GB | - | GB | Aluminium |
| Ratio (Poly/FR/F) | 75 / 25 / 0 | 75 / 15 / 10 | 65 / 25 / 10 | 75 / 25 / 0 | 67.5 / 13.5 / 10 | 65 / 25 / 10 |

**Table 2: Comparative PBF polymers**

| | **VB1** | **VB2** | **VB3** | **VB4** | **VB5** | **VB6** | **VB7** | **VB8** |
|---|---|---|---|---|---|---|---|---|
| Polymer (Poly) | PA6/12 | PA6/12 | PA6/12 | PA6/12 | PA6/12 | PA6/12 | PA12 | PA6/106 |
| Flame-retardant (FR) | - | - | - | - | Exolit OP 1230 | - | Al(OH)₃ | - |
| Synergist or Filler (SF) | GB | APP | APP | APP | - | - | - | - |
| Ratio (Poly/FR/ SF) | 75/0/25 | 75/0/25 | 75/0/25 | 75/0/25 | 75/25/0 | 100/0/0 | 75/25/0 | 100/0/0 |

### Polymer:

PA6/12: co-polymer resulting from the polymerization of a caprolactam (56.6 Mol-%) and laurolactam (43.4 Mol-%) mixture. (Tₘ: 130 °C, crystallinity < 29%, melt enthalpy < 10 J/g). Caprolactam (40.2 kg) and laurolactam (53.7 kg) were transferred with water (3.95 wt.%) to an autoclave where the mixture was stirred at 190-200 °C for 120 minutes. The mixture was then heated to 270 °C and 20 bar, and stirred under constant pressure of 20 bar for 5 hours at 290 °C. Over 4 hours, the polymer was cooled to 270 °C and the pressure was reduced to 0.3 bar. The temperature was subsequently reduced to 260 °C. The polycondensate was then granulated and dried in a standard procedure.

PA6/106: co-polymer resulting from the polymerization of a caprolactam (70 Mol-%) with 1,10 diamine and adipic acid (di-amine to di-acid 1:1 mixture, 30 Mol-% of diamine-dicarboxylic acid blocks). Resulting properties: Tₘ: 153.23°C, crystallinity < 29%, melt enthalpy < 20.31 J/g. An example of the synthesis: Caprolactam (43.08 kg) and 1,10 diamine (28.10 kg), adipic acid (23.83 kg) were transferred with water (9 wt.%) to an autoclave where the mixture was stirred at 180-200 °C for 160 minutes. The mixture was then heated to 200 °C and 20 bar, and stirred under constant pressure of 20 bar for 4 hours at 270 °C. Over 4 hours, the polymer was cooled to 260 °C and the pressure was reduced to 0.3 bar. The temperature was subsequently reduced to 260 °C, and the polycondensate was removed from the reactor then granulated and dried in a standard procedure.

PA12: Tm: 178 °C, melt enthalpy 35-45 J/g.

### Flame-retardant:

Al(OH)₃: as supplied by Huber Advanced materials.

Exolit OP1230: Clariant, CAS number: 225789-38-8, activating and decomposing starting at a temperature of at least 300°C.

### Synergist:

APP: non-mineral synergist, ammonium polyphosphate, was supplied by either Clariant (AP 422: VB3, AP 766: VB4) or Distona (MFLAM AP120: VB2. CAS number: 68333-79-9), activating and decomposing starting at a temperature of at least 300°C.

### Filler:

GB: Glass Beads <20 µm, supplied by Potters Industries

Aluminium Filler: AlSi10Mg powder supplied from Carpenter Additive.

### Step 2 - Powder produced by milling:

The granules obtained from step 1 were ground with the addition of liquid nitrogen in the counter run with a pin mill of the type Hosokawa 160C at -50 °C, to the raw ground material. Subsequently, the raw ground material was separated with an ultrasonic sieve to the grain size distribution of approximately 40-90 µm, using screen fabrics of according mesh size. Analytics: Measured grain size distribution (µm): D10: 30-40, D50: 45-60 D95: 80-100, as determined on Camsizer XT according to ISO 13322-2; crystallinity < 29%.

### Step 3: SLS Moldings:

The powder obtained from step 2 was printed for the production of test bodies (ISO 527, ISO/CD 3167 type B1) using an SLS printer SPro60 from 3D Systems (equipped with a CO₂ Laser). Plates of varied thickness: 280 mm × 240 mm × (1 - 5 mm), were used to perform the burning tests to standard (UL-94 V). A light paper-based webbing was placed under the sample to observe if any flame progression occurs. The Intense blue flame was held at 20 mm from the part for 10s, the burn time was recorded as well as any drop progression (flaming or self-extinguishing), and then the part was re-exposed to flame for an additional 10 s and the burnability/drop development or progression was recorded.

The printer was set with the parameters given in the Table 3 below for the examples B1-B7 according to the invention and for the comparative examples VB1-VB8. Table 4 summarizes the mechanical properties and Tables 5 and 6 the flame retardance properties.

**Table 3: Compounds and SLS parameters of the printing of samples**

| | **B1** | **B2** | **B3** | **B5** | **B6** | **B7** | | |
|---|---|---|---|---|---|---|---|---|
| WD/h | 1 | 1 | 1 | 1 | 1 | 1 | | |
| PBT/ °C | 122 | 122 | 122 | 139 | 138 | 138 | | |
| FT/ °C | 75 | 80 | 80 | 75 | 75 | 75 | | |
| LP | 30, 3, 0.25" | 30, 3, 0.25" | 30, 3, 0.25" | 33, 15, 0.20" | 33, 15, 0.20" | 33, 15, 0.20" | | |
| Flowability | excellent | excellent | excellent | ok | ok | ok | | |
| Cracks | none | none | none | none | none | none | | |
| Warpage | none | none | none | slight | slight | slight | | |
| Curling | none | none | none | none | none | none | | |
| CD/ h | 5 | 5 | 5 | 5 | 5 | 5 | | |

| | **VB1** | **VB2** | **VB3** | **VB4** | **VB5** | **VB6** | **VB7** | **VB8*** |
|---|---|---|---|---|---|---|---|---|
| WD/h | 1 | 1 | 1 | 1 | 1 | 1 | 2 | 1 |
| PBT/ °C | 119 | 127 | 119 | 125 | 130 | 120 | 173 | 137 |
| FT/ °C | 90 | 85 | 78 | 85 | 90 | 90 | 130 | 60 |
| LP | 30, 3, 0.25" | 30, 3, 0.25" | 30, 3, 0.25" | 30, 3, 0.25" | 60, 20, 0.2" | 30, 3, 0.25" | 30, 3, 0.25" | 20, 10, 0.25" |
| Flowability | excellent | excellent | excellent | excellent | excellent | excellent | excellent | ok |
| Cracks | none | none | none | none | none | none | none, | none |
| Warpage | none | slight | slight | slight | fail | none | significant | slight |
| Curling | none | slight | none | none | fail | none | none | none |
| CD/ h | 5 | 5 | 5 | 5 | 5 | 5 | 16 | 5 |

WD: Warm up duration; PBT: Part bed temperature; FT: Feed Temperature; LP: Laser Parameter: Fill Laser Power (W), Outline Laser Power (W), Slicer Fill Scan Spacing (mm), ': single scan; ": double scan; CD: Cool down (time); *: VB8, contrary to all other experiments, was carried out with a laser speed of 6 m/s, while in all other cases a laser speed of 12 m/s was used.

Comments in relation with VB7: This is with 25% Al(OH)₃, significant warpage was noticed, parts were difficult to print but just enough were achieved to perform the flame resistance testing and to determine mechanical properties.

**Table 4: Mechanical properties of the printed examples**

| | **B1** | **B2** | **B3** | **B5** | **B6** | **B7** | | |
|---|---|---|---|---|---|---|---|---|
| Tensile modulus (MPa) | 1469 | 1808 | 1992 | 2330 | 2440 | 2500 | | |
| Tensile strength (MPa) | 35.6 | 39 | 39.5 | 51 | 42 | 48 | | |
| Elongation at break (%) | 19.3 | 8.1 | 8.9 | 5.8 | 3.6 | 3.3 | | |
| Charpy impact strength (kJ/m²) | 41.5 | 38 | 39 | 53.9 33.8 | | 38 | | |
| Part colour | white | white/grey | white/grey | white | white | grey | | |
| Surface finish | smooth | rough | rough | rough | rough | rough | | |

| | **VB1** | **VB2** | **VB3** | **VB4** | **VB5** | **VB6** | **VB7** | **VB8** |
|---|---|---|---|---|---|---|---|---|
| Tensile modulus (MPa) | 1613 | 466 | 1366 | 299 | X | 1163 | 2430 | 1730 |
| Tensile strength (MPa) | 35.3 | 9.7 | 32.3 | 8.2 | X | 36.2 | 49.9 | 51 |
| Elongation at break (%) | 11.8 | 20.4 | 10.8 | 17.9 | X | 70.5 | 3.9 | 10.9 |
| Charpy impact strength (kJ/m²) | 30.9 | 14.4 | 32.6 | 10.5 | X | 42.4 | Failed | 92 |
| Part colour | grey | white | white | white | failed | natural | yellow | white |
| Surface finish | rough | rough | smooth | smooth/ frail | failed | smooth-rough | rough | rough |

All materials were measured after conditioning 40 h, 50% humidity, at 23°C; X in VB5 indicates that the corresponding printed examples could not be produced as the powder starting material was not suitable for the SLS process and no parts could be produced; Natural is defined as white with a slight translucent nature (visual). White is defined as colourless with no-translucent nature (visual). Frail parts are defined as parts that are not well sintered at wall thickness ≥1 mm (e.g. is readily tearable from the FR plate). Failed is defined as did not sinter (no parts produced) or warpage caused problems with obtaining reliable measurements.

**Table 5: Overview of flame retardancy according to industry standard UL-94 V**

| | **B1** | **B2** | **B3** | **B5** | **B6** | **B7** | | |
|---|---|---|---|---|---|---|---|---|
| Times exposed | 2 | 2 | 2 | 2 | 2 | 2 | | |
| Exposure Duration (s) | 10 | 10 | 10 | 10 | 10 | 10 | | |
| Best Part Thickness (mm) | 1 | 2 | 2 | 1.3 | 2.1 | 1.3 | | |
| Burn time (s) | < 10 | < 10 | < 10 | < 5 | < 5 | < 5 | | |
| Droplets | Y | Y | Y | Y | Y | Y | | |
| Droplet Self extinguish | Y | Y | Y | Y | Y | Y | | |
| Rating | V0 @ 1 mm | V0 @ 2 mm | V0 @ 2 mm | V0 @ 1 mm | V0 @ 2 mm | V0 @ 1 mm | | |

| | **VB1** | **VB2** | **VB3** | **VB4** | **VB5** | **VB6** | **VB7** | **VB8** |
|---|---|---|---|---|---|---|---|---|
| Times exposed | 2 | 2 | 2 | 2 | X | 2 | 2 | 2 |
| Exposure Duration (s) | 10 | 10 | 10 | 10 | X | 10 | 10 | 10 |
| Best Part Thickness (mm) | 3 | 2 | 3 | 3 | X | 5 | 2 | 2 |
| Burn time (s) | >10 | < 10 | < 10 | < 10 | X | > 10 | < 10 | > 20 |
| Droplets | Y | Y | Y | N | X | Y | Y | Y |
| Droplet Self extinguish | N | N | Y | - | X | N | Y | N |
| Rating | Fail | V0 @ 2 mm | V0 @ 3 mm | V0 at 3 mm | X | Fail | V 0 at 2 mm | Fail |

X in VB5 indicates that the corresponding printed examples could not be produced as the powder starting material was not suitable for the SLS process and no parts could be produced; Un-sintered powders for each material were removed from the printer, sieved out and re-printed. The flame retardancy test was re-performed yielding the same results as presented above.

**Table 6: Overview of flame retardancy according to industry standard UL-94 V after Vapor smoothing by AMT-Vapor smooth technology**

| | **B1 - Vapor smoothed** | **B2 - Vapor smoothed** |
|---|---|---|
| Compound basis: | AL(OH)₃ | AL(OH)₃/GB |
| Times exposed | 2 | 2 |
| Exposure Duration (s) | 10 | 10 |
| Best Part Thickness (mm) | 1 | 2 |
| Burn time (s) | < 10 | < 10 |
| Droplets | Y | Y |
| Droplet Self extinguish | Y | Y |
| Rating | V0 @ 1 mm | V0 @ 2mm |

### Methods:

### Properties of starting polyamide material:

***Melting point and melt enthalpy:*** melting point Tₘ and melt enthalpy (second melting peak TM2) were determined according to ISO standard 11357-1 (2016), -2 (2013) and -3 (2011), measured on granules or powder, where the differential scanning calorimetry (DSC) is performed at a heating rate of 10 °C/min and the values are from the second temperature cycle.

### Properties of powder material and the printed parts:

***Crystallinity of PA6*/*12 and PA6*/*106 powder:*** determined by Powder X-ray diffraction (PXRD) on a Rigaku MiniFlex-600C, using the following parameters:
Apparatus configuration:
   Goniometer: 150 mm radius ; X-ray source: Cu Kα (1.54186 Å); Incident Soller slit: 2.5°; Length-limiting slit: 10 mm; Divergence slit: 0.625°; Attachment: ASC-8; Scattering slit: none; Receiving Soller slit: 2.5°; Receiving slit: none; Monochromatization: Kβ Filter (x1.5) (Ni); Detector: D/teXUltra2.
Measurement conditions:
   Voltage - Current: 40kV -15mA; Scan axis: θ / 2 θ; Scan mode: 1D scan; Scan range: 3.5 -70°; Scan speed: 15°/min; Sampling step: 0.1°.

The crystallinity was calculated using the Degree of Crystallinity (DoC) method, which compares the sum of the intensities of all crystalline peaks (Bragg) to the total scattering intensity to estimate the amorphous concentration.

***Flowability*** was assessed visually by how filled the parts were after re-coating: Excellent: complete filling, Good: some parts had slight defects. Flowability means that a defect-free powder bed results from the insertion of the next powder layer, so that the powder does not clump, for example.

***Tensile modulus*** was measured according to ISO 527 with a pulling speed of 1 mm/min ISO tension rod, standard: ISO/CD 3167, type A1, 170 × 20/10 × 4 mm at a temperature of 23 °C.

***Tensile strength*** and ***Elongation at break*** were measured according to ISO 527 with a tensile speed of 5 mm/min ISO tension rod, standard: ISO/CD 3167, type A1, 170 × 20/10. × 4 mm, temperature 23 °C

***Charpy Impact strength*** was measured according to ISO 179/*eA on ISO test bars according to standard: ISO/CD 3167, type B1, 80 × 10 × 4 mm at 23 °C.

***Surface quality finish,*** as well as ***Cracks, Warpage*** and ***Curling*** were assessed visually. Cracks are cracks in the powder bed that occur when the new powder layer is pushed, which means that underlying areas are lasered several times and in the best case only cracks occur in the finished component, but lumps in the powder bed are also possible, which destroy the entire printing process. Curling refers to distortion of, for example, the edges of the component during the laser process. Warpage, on the other hand, refers to distortion over the entire component, which usually occurs when the laser bed cools down, i.e. only after the laser has been applied.

**Flame retardant testing UL 94-V:** Strips were printed by the above method of 280 mm × 240 mm × X mm (where X = 1 mm, 2 mm, 3 mm, 4 mm, or 5 mm). The strips were suspended above the intense blue butane flame, at a distance of 20 mm (the parts were envolped by the lighter blue flame) for 10 seconds. The flame was removed, and the duration of burning was timed, together with notation if droplets formed that did or did not self-extinguish. After the flame had or was extinguished, if possible the parts were re-exposed to the flame for an additional 10 seconds and the observations were repeated. All wall thicknesses were tested for each sample. The best performing thickness was recorded in Table 2 with the rating.

**Vapor smoothing (by AMT Technologies):** was performed using a post-pro SF100 from amt. Standard settings for Co-polyamides were used.

### Discussion of the results:

As one can see from the evidence in the tables, the ability for PA6/12 as well as PA6/106 to perform well in flame-resistance testing standard UL 94 V was significantly improved by inclusion of a mineral based flame retardant. The presence of glass enables a reduction in the amount of flame retardant needed to achieve V0 at 2 mm, however glass alone was not suitable to inhibit flame retardancy. In all examples flowabiltiy was good, and printability was good for all examples according to the invention. There was no loss of printing performance or flame retardancy across prints with 0% addition of virgin powder (only part cake and overflow). In addition, it should be noted that the mechanical values are for conditioned (40 h, 50% humidity, at 23°C) parts which retain the good mechanical properties. In addition, parts can be well vapor smoothed in comparison with other standard materials, enabling more applications for flame retardant materials.

## Claims

1. Powder for the production of mouldings in a layer-by-layer process in which areas of a powdered layer are selectively melted, sintered, fused, or solidified,
wherein the powder consists of the following components:
a) 60 - 99 % by weight of a thermoplastic polymer selected as at least one polyamide with a melting temperature smaller than 175°C;
b) 1 - 40 % by weight of a mineral inorganic flame retardant;
c) 0 - 25 % by weight of additives, different from a) and b);
wherein the components a)-c) add up to 100 % by weight of the total material of the powder.

2. Powder according to claim 1, wherein the thermoplastic polymer has a crystallinity below 35%, preferably below 30%.

3. Powder according to claim 1, wherein the thermoplastic polymer is a semi-crystalline polyamide, preferably based on aromatic and/or aliphatic dicarboxylic acid and/or aromatic and/or aliphatic, including cycloaliphatic, diamine and/or aromatic and/or aliphatic lactam/amino carboxylic acid building blocks,
wherein preferably the polyamide is a copolyamide which comprises caprolactam building blocks, preferably with further building blocks based on linear aliphatic lactams/aminocarboxylic acids and/or linear aliphatic dicarboxylic acids and linear aliphatic diamines, at last one of which preferably having at least 9 carbon atoms, and
wherein further preferably the polyamide is selected from the group consisting of: PA6/6I, PA 6/66, PA 6/66/6I, PA 6/106/12, PA 6/610, PA 6/610/12, PA 6/612/12, PA 6/1010/12, PA 6/1012/12, PA6/12, PA6/106, PA6/1010, PA6/1012, PA6/69 or a mixture thereof, in particular PA6/12 or PA 6/106 or a mixture thereof, wherein preferably the caprolactam molar proportion is at most 70%, preferably at most 60%, preferably in the range of 30-70%, wherein the caprolactam molar proportion is with respect to the total of the lactams used in case of PA6/12 and with respect to the total of the lactams and diamine-dicarboxylic acid blocks used in the other cases.

4. Powder according to any of the preceding claims, wherein the thermoplastic polymer is selected as polyamide PA 6/12 or a copolymer thereof, with a laurolactam molar proportion of at least 20%, preferably of at least 25%, preferably in the range of 30-70%, wherein the laurolactam molar proportion is with respect to the total of the lactams used.

5. Powder according to any of the preceding claims, wherein the thermoplastic polymer
has a melting point, measured in accordance with ISO 11357, of below 170 °C or below 160 °C or below 150 °C or below 140 °C, preferably in the range of 100-155 °C or 120-140 °C,
and/or is a ground or precipitated polyamide powder, and wherein preferably in case of a ground powder it is prepared by a cryogrinding process,
and/or has a relative viscosity, preferably measured in m-cresol at a temperature of 20 °C and a concentration of 0.5 wt.-% according to ISO 307, in the range of 1.5-2.1, preferably in the range of 1.6-2.0,
and/or has a melt enthalpy, measured in accordance with ISO 11357, below 25 or below 20 J/g, preferably below 10 J/g.

6. Powder according to any of the preceding claims, wherein the proportion of component a) of the thermoplastic polymer is in the range of 65-95% by weight, preferably in the range of 70-90% by weight or 70-80% by weight, in each case with respect to the total material of the powder.

7. Powder according to any of the preceding claims, wherein the inorganic flame retardant is activating and/or decomposing starting at a temperature of at most 260°C or at most 200°C, preferably at most 190°C, wherein preferably the inorganic flame retardant is activating and/or decomposing in a temperature range of 170-350°C or 170 - 260°C, preferably in the range of 180-340°C or 180 - 240°C.

8. Powder according to any of the preceding claims, wherein the inorganic flame retardant is a nitride, preferably selected from the group consisting of BN, ZnB or a mixture thereof and/or a metal hydroxide, preferably selected from the group consisting of aluminium trihydroxide (Al(OH)₃), basic magnesium carbonate (MgCO₃Mg(OH)₂), magnesium dihydroxide (Mg(OH)₂), or a combination thereof, wherein preferably the inorganic flame retardant is selected as aluminium trihydroxide.

9. Powder according to any of the preceding claims, wherein the proportion of component b) of the inorganic flame retardant is in the range of 5-30%, preferably in the range of 10-25%, most preferably in the range of 15-25%, in each case with respect to the total material of the powder.

10. Powder according to any of the preceding claims, wherein the additives of component c) are different from component b) and selected from the group consisting of fillers, preferably selected from the group of talc, aluminium oxide-based fillers, glass fillers, preferably glass fibres and/or glass beads, calcium carbonate; flow agents, preferably selected from the group of fumed or precipitated silica, metal salts of long-chain fatty acids, including metal stearates, titanium dioxide, group 1 salts, aluminium oxide; flame retardant systems different from component b), flame retardant synergist compounds, preferably containing nitrogen and/or phosphorous, including melem, melam, melon or other melamine or derivatives thereof.

11. Powder according to any of the preceding claims, wherein the powder has an average particle size D50, preferably measured according to ISO 13322-2, in the range of 50-80 µm, preferably in the range of 50-65 µm, more preferably in the range of 50-60 µm,
and/or wherein the thermoplastic, ground polyamide powder has an MFR value, preferably measured according to ISO 1133, in the range of 6-17 g / 10min.

12. A method for preparing a powder according to any of the preceding claims, wherein, after melt-mixing of the components a)-c), the thermoplastic material is subjected to a cryo-grinding process or a precipitation process and is subsequently subjected to a particle size filtering process, preferably for the generation of a particle size distribution such that the average particle size D50, preferably measured according to ISO 13322-2, is in the range of 50-80 µm, preferably in the range of 50-65 µm, more preferably in the range of 50-60 µm.

13. A method of printing a three-dimensional article comprising the steps:
providing a powder according to any of claims 1 to 11; and
selectively solidifying layers of the powder to form the article, preferably using focused or non-focused input of electromagnetic energy, wherein preferably the powder is provided in a layer-by-layer process,
wherein preferably the powder has a particle diameter D50 measured according to ISO 13322-2 of 50-80 µm, preferably 50-65 µm, more preferably 50-60 µm.

14. A flame-retardant article prepared using a method as defined in claim 13.

15. Use of a powder according to any of claims 1-11 for the production of mouldings in a in a layer-by-layer process in which areas of the powdered layer are selectively melted, sintered, fused, or solidified, preferably by focused or non-focused input of electromagnetic energy.
